# EUROPEAN PATENT APPLICATION

(11) **EP 1 211 849 A2**
(43) Date of publication of application: **05.06.2002**
(21) Application number: 01305235.2
(22) Date of filing: 15.06.2001
(51) Int. Cl.: H04L 12/40, G06F 13/40

(54) **Method and apparatus for electrically terminating a transmission bus for a communication network**

(30) Priority: 15.06.2000 US 595162
(71) Applicant: Schneider Automation Inc., North Andover, Massachusetts 01845 (US)
(72) Inventor: Breinlinger, Richard H., Hampsted NH 03641 (US)
(74) Representative: Gray, John James

(57) **Abstract**

A method and apparatus for automatically terminating a communication network 10 after sensing a portion of the network 10 has been removed. A switch 12 is responsive to a voltage on the bus 14. The switch 12 senses the presence of the voltage on the bus 14 and generates a terminate enable. Upon sensing the absence of the voltage on the bus 14, a terminal resistor 20 is inserted onto the communication bus 14 to terminate the newly created end of the bus 14.

## Description

This invention relates generally to the field of computer networks and more particularly to a system for reducing network communication disruptions caused by the removal of part of, or device on, the network.

Computer networks are an integral part of everyday life. A variety of tasks, both complex and mundane, are effectively and quietly monitored and controlled by computer networks without requiring constant human interaction. Computer networks can interconnect several devices or modules for controlling and monitoring an environment, process or task. The devices and/or modules can be linked together via a transmission bus. These devices include, computers, programmable logic controllers, sensors, gauges, monitors, display terminals, valves, motors, machinery, alarms, etc.

CAN (controller area network) is a serial bus system especially suited for networking "intelligent" devices as well as sensors and actuators within a system or sub-system. CAN is a serial bus system with multi-master capabilities wherein all CAN nodes are able to transmit data and several CAN nodes can request the bus simultaneously. In CAN networks, there is no addressing of subscribers or stations in the conventional sense, but instead, prioritized messages are transmitted. A transceiver sends a broadcast message to all CAN nodes. Each node determines on the basis of the message received whether it should process the message. The prioritized messages facilitate conflict resolutions of multiple message transmissions on the bus.

As computer networks become more reliable, people become more dependent on them. Ironically, the more dependent people become on computer networks, the more difficult it is to handle problems that arise when the network fails to operate properly. Because the modules are interconnected, problems occurring with one module or section of the network can affect other parts of the network.

The modules communicate with each other via the communication bus. Network problems can occur through the failure or removal of an individual module, device or sub-network in the network. If the bus is severed or if a module is removed or replaced, the electrical characteristics of the bus are affected; namely, the electrical impedance characteristics of the transmission bus throughout the network. When the impedance characteristic of the bus is not matched within the network, the communication signals are adversely affected and the signal transmission can get corrupted.

It is desirable to quickly fix the problems resulting from a severed or truncated communication bus and to improve the operability of the network. Prior to this invention, a need existed for quickly repairing disruptions in the communication network for the purpose of maintaining high quality communications in as much of the network as possible.

This invention in different independent aspects set forth below is directed to solving or at least mitigating these and/or other problems.

One aspect of the present invention provides a communication network capable of electrically terminating a truncated network to reduce the resulting signal disruptions within the remaining network.

Another aspect of the present invention provides a communication network having a transmission bus and at least one module. The communication network comprises a switch operably connected to the bus and the module. The switch is responsive to the bus to generate a terminate enable. A connector operably connects the module to the bus, and a terminal resistor is operably connected to the switch. The terminal resistor is inserted onto the bus in response to the terminate enable.

Another aspect of the present invention is directed to a method of minimizing signal disruptions in a communication network resulting from severing the transmission bus or the removal of a module, device or sub-network from the communication network. The method comprises the steps of providing a switch operably connected to the communication bus; sensing a voltage signal on the communication bus; generating a terminate enable responsive to the voltage signal; and inserting with the switch a terminal resistor onto the communication bus in response to the terminate enable.

In the preferred embodiment of the invention, a communication bus serially connects at least one module in a network. A voltage is sensed on the bus. The absence of the voltage indicates a discontinuity in the network's transmission bus. A terminal resistor is inserted onto the bus to electrically terminate the "new" end of the network by a switch responsive to the voltage present on the bus. Thus, the occurrence of transmission signal reflections and disruptions on the network are prevented.

Other features and advantages of the invention, which are believed to be novel and non-obvious, will be apparent from the following specification taken in conjunction with the accompanying drawings in which there is shown a preferred embodiment of the invention. Reference is made to the claims for interpreting the full scope of the invention which is not necessarily represented by such embodiment.

### BRIEF DESCRIPTION OF THE DRAWINGS

FIGURE 1 shows an overview block diagram of a network system illustrating the relationship between the modules and communication bus according to the present invention;
FIGURE 2 is a schematic diagram showing the relationship between the switch, terminal resistor, serial communication bus and device module;
FIGURE 3 is a block diagram showing an alternative embodiment of the invention;
FIGURE 4 is a block diagram showing an alternative embodiment of the invention wherein the network has a ring-type bus; and,
FIGURE 5 is a block diagram showing a network comprised of a plurality of sub-networks.

### DETAILED DESCRIPTION

Although this invention is susceptible to embodiments of many different forms, a preferred embodiment will be described and illustrated in detail herein. The present disclosure exemplifies the principles of the invention and is not to be considered a limit to the broader aspects of the invention to the particular embodiment as described.

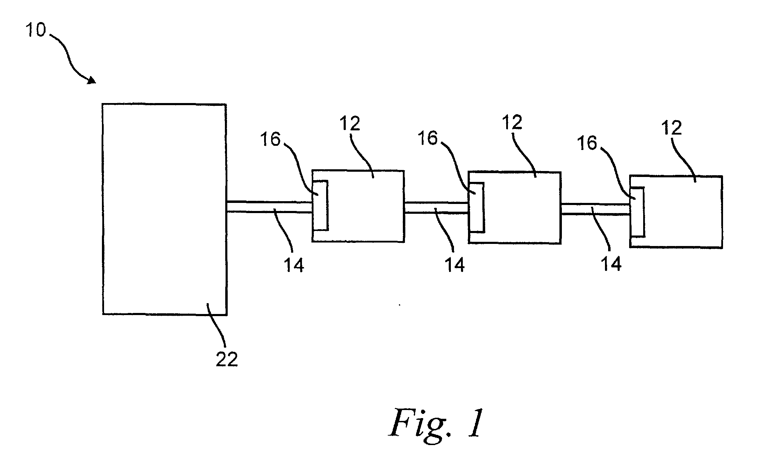

FIGURE 1 shows a communications network 10, preferably CAN or CANopen. A plurality of devices 12 are interconnected by a communication bus 14. Preferably, the communication bus 14 is a serial bus and several other types of buses can be used, i.e., Ethernet 10Base-2, 10Base-5, Arcnet, RS485, ModbusPlus, Profibus, Devicenet, etc. A connector 16 operably connects each device module 12 to the communication bus 14. Electrical signals, data and/or control, travel on the bus 14 between the modules 12 of the network 10.

The quality of the signal transmission is susceptible to noise, etc. due to the high speed of the communication signal. Generally, a high speed bus is required to be properly terminated at its ends with a matching terminal impedance to ensure accurate communication throughout the network. An improperly terminated transmission bus having unmatched terminal impedance values at its ends will allow high speed signals to reflect on the bus, causing signal disruptions.

Similar to an improperly terminated communication bus 14, the removal of a module 12 from the network 10 or the severing of the bus 14 will also result in reflections and disruptions of communication signals on the network 10. The removal of a module 12 from the network 10 will truncate the network bus 14 near the removed module 12, leaving the bus 14 improperly terminated near that location and ultimately causing poor performance of the computer network.

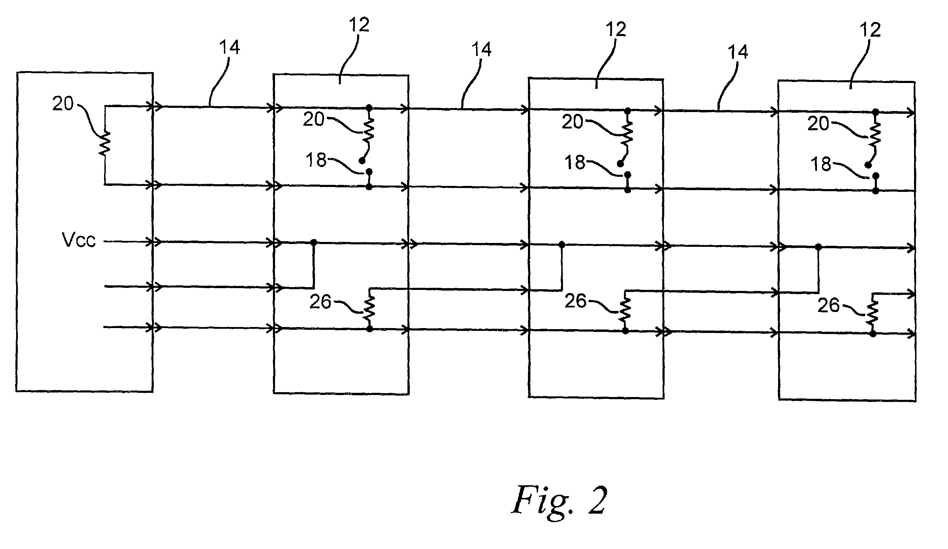

FIGURE 2 depicts a schematic diagram of a switch 18 operably connected to the bus 14 and a device module(s) 12. (modules 1, 2 and 3). The switch 18 is preferably electronic, but may also be electro-mechanical. The switch 18 is responsive to the presence of a voltage on the bus to generate a terminate signal. A connector 16 operably connects each module 12 to the bus 14. A terminal resistor 20 of each module 12 is operably connected to the switch 18. Sensing the voltage signal on the bus generates a terminate enable. In response to the terminate enable, the switch 18 inserts the matching terminal resistor 20 onto the bus 14 near the module 12 nearest the newly created end of the bus 14. Terminating the newly created end of the bus 14 with a matching terminal resistor 20 will maintain the quality of signal communications in the remaining network 10.

One terminating resistor (not shown) resides within the bus coupler housing 22. The other terminating resistor 20 resides near the other end of the bus 14. Many modules 12, devices 12, connectors 16 and cables 14 lie between the two resistors. The far right terminating resistor 20 can be disconnected from the network 10 either by error or design, i.e., removing the module 12. When this occurs, the module's switch 16 responds by sensing the removal of the module 12, device or sub-network and inserting a matching terminating resistor 20 with an appropriate value at that point in the network 10. Thus, the network 10 is automatically "healed" nearest the point of discontinuity within the network, thus keeping the largest possible amount of remaining network in operable use.

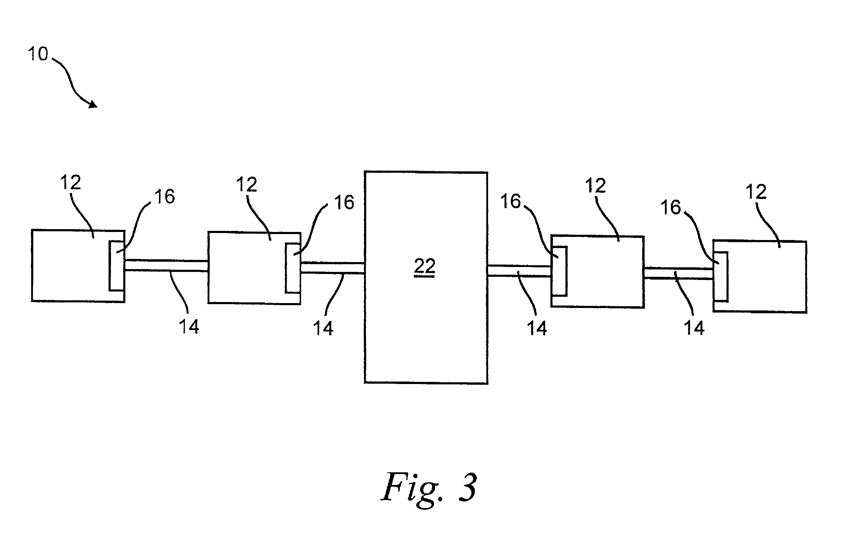

Each module 12 has a switch 18 operably connected to a load resistor 26. The switch 18 is preferably solid state, but may be a electromechanical coil with the relay replaced. The switches 18 and load resistors 26 of FIGURE 3 can be replaced with electromechanical relays having a coil in place of the load resistor 26 and the normally closed contacts replacing the switches. Preferably, the switches are solid state devices, similar to model 4604 manufactured by MAXIM. Multiple solid state switches can also be placed in parallel to lower the "on" resistance of the switch.

A voltage signal flows to each module 12. If the voltage is not sensed by the modules' switch, i.e., the voltage at the load resistor is zero, the switch 18 is closed. If the voltage is sensed, i.e., the voltage at the load resistor is not zero, the switch 18 is opened. Similarly, if the voltage on the bus 14 is not sensed by any module's 12 switch 18, i.e., is zero volts, the respective module's 12 switch 18 will insert the terminating resistor 20 into the network 10 at that location on the bus 14. Thus, the network 10 is properly terminated at its farthest operable point on the bus 14. Preferably, the value of the terminating resistance should match the characteristic impedance of the network cable bus. For CAN bus systems, the characteristic impedance is approximately 120 ohms, but other cable system may require different impedance values to properly terminate the network.

For example, if the voltage across the load resistor 26 for the third module 12 is 0 volts, the third module's switch will be closed and the terminating resistor 20 of the third module 12 will be inserted into the network 10, as desired. As another example, if either the third module 12 or the bus 14 between the second and third module 12 is disconnected, the voltage at the load resistor 26 of the second module 12 will be 0 volts. The switch 18 of the second module 12 will respond to the lack of voltage on the bus 14 and close the switch 18 of the second module, thus inserting the terminating resistor 20 of the second module 12 onto the bus 14 and again, properly terminating the network 10 at the farthest possible location within the remaining operable network 10.

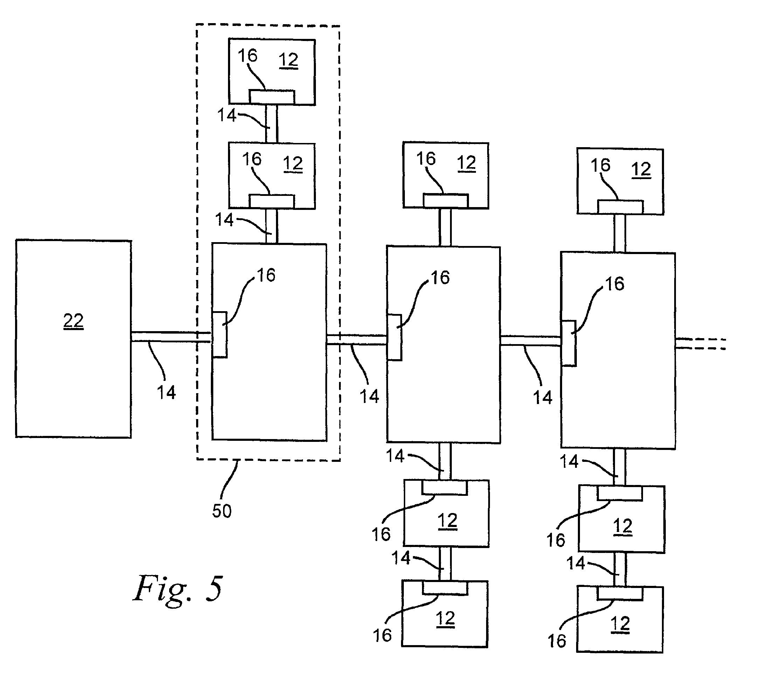

The invention can also be implemented to work with "two-sided" networks as well. FIGURE 5. It is also to be understood that one of ordinary skill in the art could easily substitute normally opened switches for normally closed switches and normally closed switches for normally opened ones.

The network terminating aspects of the present invention are also implementable in a network of sub-networks 24. FIGURE 5. The invention can be incorporated to interconnect a plurality of sub-networks 24 wherein a plurality of the sub-networks 24 are in communication with each other. Thus, communications between the remaining sub-networks 24 will not be adversely affected by the removal or discontinuation of a portion of a downstream bus 14, sub-network 24 or module 12. A switch 18 and terminal resistor 20 can be located near the connector 16 of each sub-network 24. A terminal resistor 20 substantially matching the resistance value of an adjacent sub-network 24 will be inserted onto the network 10 in the event that the associated sub-network 24 is removed or disconnected from the network 10 by design or error.

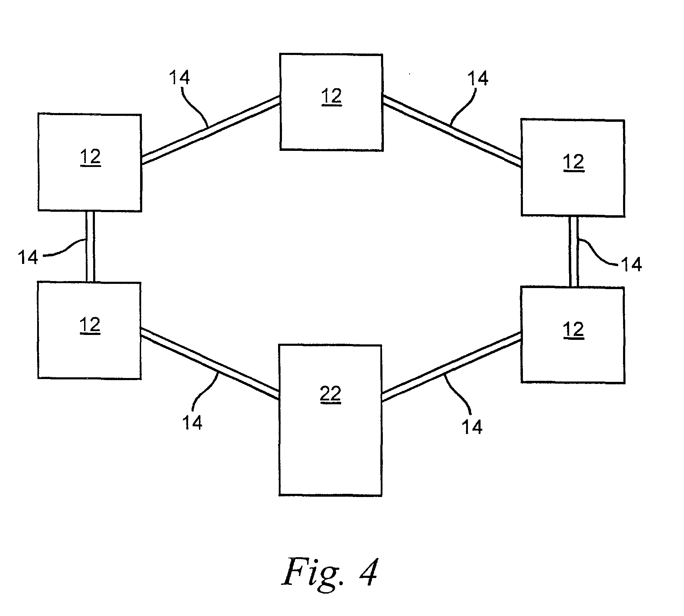

The bus 14 can also be ring-like. FIGURE 4. A split in the communication bus 14 will be sensed by the nearest adjacent switches 18 and a terminal resistor 20 from each adjacent module 12 will be inserted onto the communication bus 14 at each end of the network 10 to reduce the adverse affects of signal reflections resulting from an improperly terminated end.

While the specific embodiments have been illustrated and described, numerous modifications are possible without departing from the scope or spirit of the invention.

## Claims

1. A communication network having a bus and at least one device, the communication network comprising:
a switch operably connected to the bus and the at least one device, the switch being responsive to the bus to generate a terminate enable;
a connector operably connecting the at least one device to the bus; and,
a terminal resistor operably connected to the switch, wherein the switch inserts the terminal resistor onto the bus in response to the terminate enable.

2. The communication network of claim 1 wherein the bus is a serial type bus.

3. The communication network of claim 1 or claim 2 wherein the bus is a loop.

4. The communication network of any preceding claim wherein the switch is electronic.

5. The communication network of any preceding claim wherein the network is one of CAN or CANopen.

6. The communication network of any preceding claim wherein the bus is one of Ethernet 10Base-2 or Ethernet 10Base-5.

7. The communication network of any preceding claim wherein the bus supports CAN communication.

8. The communication network of one of claims 1-5 wherein the bus is one of ModbusPlus, Arcnet or RS485.

9. The communication network of any preceding claim wherein the value of the terminal resistor is equal to the value of the characteristic impedance of the network.

10. A method of minimizing communication signal disruptions in a communication network resulting from the removal of a portion of the communication network, the method comprising the steps of:
providing a switch operably connected to a communication bus;
sensing a voltage signal on the communication bus;
generating a terminate enable responsive to the voltage signal; and,
inserting with the switch a terminal resistor onto the communication bus in response to the terminate enable.

11. The method of claim 10 wherein the network is one of CAN or CANopen.

12. The method of claim 10 wherein the bus is one of Ethernet 10Base-2 or Ethernet 10Base-5.

13. The method of one of claims 10-12 wherein the bus supports CAN communication.

14. The method of one of claims 10 to 13 wherein the bus is one of Arcnet, ModbusPlus or RS485.

15. The method of one of claims 10 to 14, further comprising:
selecting a value for the terminal resistor equivalent to properly match the characteristic impedance of the network.

16. The method of claim 15 wherein the value of the terminal resistor selected is 120 ohms.

17. A system of minimizing signal disruptions in a communication network, the system comprising:
an ethernet communication bus;
a connector operably connecting a first device to the communication bus;
an electronic switch operably connected to the communication bus and the first device, the switch being responsive to the bus to generate a terminate enable; and,
a terminal resistor operably connected to the switch, wherein the switch inserts the terminal resistor onto the communication bus in response to the terminate enable.

18. The system of claim 17 wherein the network is one of CAN or CANopen.

19. The system of claim 17 wherein the ethernet bus is one of Ethernet 10Base-2 or Ethernet 10Base-5.

20. The system of one of claims 17 to 19 wherein the value of the terminal resistor is 120 ohms.

21. The system of one of claims 17 to 20 wherein the bus supports CAN communication.

22. The system of one of claims 17 to 21 wherein the bus is one of Arcnet, ModbusPlus or RS485.
